# EUROPEAN PATENT SPECIFICATION

(11) **EP 3 769 585 B1**
(45) Date of publication and mention of the grant of the patent: **05.08.2026**
(21) Application number: 19715721.7
(22) Date of filing: 22.03.2019
(51) Int. Cl.: H05B 6/06

(54) **INDUCTION HEATING ACCESSORIES**
VORRICHTUNGEN FÜR INDUKTIONHEIZUNG
ACCESSOIRES POUR CHAUFFAGE PAR INDUCTION

(30) Priority: 22.03.2018 US 201815928268
(43) Date of publication of application: 27.01.2021
(73) Proprietor: Illinois Tool Works, Inc., Glenview, Illinois 60025 (US)
(72) Inventor: SALSICH, Anthony V., Glenview, Illinois 60025 (US); PROCHNOW, Gregg, Glenview, Illinois 60025 (US); MCWITHEY, Kevin, Glenview, Illinois 60025 (US)
(74) Representative: HGF
(86) International application number: PCT/US2019/023520
(87) International publication number: WO 2019/183442

(56) References cited:
- EP-A1- 2 407 564
- CN-A- 106 493 508
- US-A1- 2018 049 277
- US-B1- 6 713 737

## Description

### RELATED APPLICATIONS

This international application claims priority to U.S. Patent Application Serial No. 15/928,268, filed March 22, 2018, entitled "INDUCTION HEATING ACCESSORIES."

### BACKGROUND

This disclosure relates generally to induction heating, and more particularly to induction heating accessories.
US 2018/049277 A1 discloses induction heating power supplies, data collection systems, and induction heating systems to communicate over an induction heating cable.
CN 106493508 A discloses a handle of a charging system based on electromagnetic induction. US 6713737 B1 discloses systems for reducing noise from a thermocouple in an induction heating system.
EP 2407564 A1 discloses a management system for high frequency quenching.

### SUMMARY

Induction heating accessories are disclosed, substantially as illustrated by and described in connection with at least one of the figures, as set forth more completely in the claims.

### BRIEF DESCRIPTION OF THE DRAWINGS

FIG. 1 shows an example induction heating system in accordance with aspects of this disclosure.
FIG. 2 is a circuit schematic diagram of an example implementation of the induction heating system of FIG. 1.
FIG. 3 shows another example induction heating system in accordance with aspects of this disclosure.
FIG. 4 is a block diagram of another example heating system that includes a heating power supply having a transceiver circuit, and a data collection device that includes a transceiver circuit.
FIG. 5 is a block diagram of another example heating system that includes a heating power supply having a transmitter circuit, and a data collection device that includes a receiver circuit and a control circuit.
FIG. 6 shows another example induction heating system including an induction heating accessory configured to indicate the presence of induction heating power, in accordance with aspects of this disclosure.
FIG. 7 is a schematic diagram of an example implementation of the induction heating accessory of FIG. 6.

The figures are not necessarily to scale. Where appropriate, similar or identical reference numbers are used to identify similar or identical components.

### DETAILED DESCRIPTION

As used herein, the term "port" refers to one or more terminals(s), connector(s), plug(s), and/or any other physical interface(s) for traversal of one or more inputs and/or outputs. Example ports include weld cable connections at which a weld cable is physically attached to a device, a gas hose connector connectors that may make physical and/or electrical connections for input and/or output of electrical signals and/or power, physical force and/or work, fluid, and/or gas.

As used herein, the term "induction heating power" refers to AC electrical power capable of inducing a current in a workpiece when flowing through an appropriately arranged cable so as to heat the workpiece by magnetic induction.

As used herein, a "circuit" includes any analog and/or digital components, power and/or control elements, such as a microprocessor, digital signal processor (DSP), software, and the like, discrete and/or integrated components, or portions and/or combinations thereof.

Disclosed example induction heating power supplies include a power conversion circuit configured to convert input power into induction heating power and transmit the induction heating power via an induction heating cable, and at least one of a receiver circuit coupled to the induction heating cable and configured to receive data via the induction heating cable or a transmitter circuit coupled to the induction heating cable and configured to transmit data via the induction heating cable.

Some example induction heating power supplies further include a control circuit configured to control the power conversion circuit to modify the induction heating power based on the data. In some examples, the data includes at least one of an ambient temperature at a workpiece being heated with the induction heating cable, a temperature of the induction heating cable, a temperature of a blanket in contact with the induction heating cable, a temperature of the workpiece, a coolant temperature, a coolant pressure, a coolant flow rate, a current measurement of current flowing through the induction heating cable, a voltage measurement of a voltage at the induction heating cable, an error signal, or a control signal. In some examples, the data includes at least one of a workpiece identifier, an induction heating cable identifier, an operator identifier, date information, time information, geographic information, a cable fixture identifier, or operator input.

In some examples, the receiver circuit and/or the transmitter circuit include at least one of a high pass filter circuit or a bandpass filter circuit to attenuate the induction heating power. In some examples, the receiver circuit and/or the transmitter circuit include a low pass filter circuit to attenuate the induction heating power. Some example induction heating power supplies further include an isolation circuit to selectively electrically isolate the receiver circuit and/or the transmitter circuit based on whether the induction heating power is flowing through the induction heating cable.

Some examples further include an antenna configured to receive the data from the induction heating cable, the receiver circuit comprising a radio receiver to wirelessly receive the data via the antenna. Some examples further include a data storage device configured to store the data as the data is received at the receiver circuit. Some such examples further include a second transmitter circuit to transmit the stored data.

In some examples, the power conversion circuit, when not outputting the induction heating power via the induction heating cable, outputs a pulse via the induction heating cable, the receiver circuit configured to receive the data via the induction heating cable in response to the pulse. In some examples, the power conversion circuit provides the induction heating power via the induction heating cable for a first time period, reduces or removes the induction heating power for a second time period following the first time period, and provides the induction heating power via the induction heating cable during a third time period following the second time period. The receiver circuit receives the data during the second time period.

Disclosed example induction heating data collection devices include a transmitter circuit to transmit induction heating data via an alternating current signal at a frequency different than an induction heating current frequency on an induction heating cable, and a coupling circuit to couple the transmitter circuit to the induction heating cable.

In some examples the coupling circuit includes a current transformer magnetically coupled to the induction heating cable or a cable tap that couples the coupling circuit in parallel with an inductance of a workpiece heated by the induction heating cable. Some example induction heating data collection devices further include a filter circuit to attenuate the induction heating current frequency between the transmitter circuit and the coupling circuit. Some example induction heating data collection devices further include an energy storage device to provide power to the transmitter circuit when induction heating power is not being transmitted through the induction heating cable. Some such examples further include a power extraction circuit to extract power from the induction heating cable via the coupling circuit to charge the energy storage device.

Some example induction heating data collection devices further include a power extraction circuit to extract power from the induction heating cable via the coupling circuit and to provide power to the transmitter circuit. Some examples further include at least one of: a sensor digitizer to receive data from at least one of a temperature sensor, a coolant pressure sensor, a coolant flow sensor, or a location sensor; a data reader to read an identifier; or a user interface to receive the data. Some example induction heating data collection devices further include a receiver circuit to receive second data via the induction heating cable.

Some example induction heating systems include an induction heating cable, an induction heating data collection device, and an induction heating power supply. The induction heating cable delivers induction heating power to a workpiece according to an arrangement of the induction heating cable proximate the workpiece. The induction heating data collection device is inductively coupled to the induction heating cable proximate the workpiece, collects induction heating data corresponding to delivery of the induction heating power to the workpiece via the induction heating cable, and transmits the induction heating data via the inductive coupling and the induction heating cable. The induction heating power supply outputs the induction heating power and receives the induction heating data via the induction heating cable.

In some examples, the induction heating data includes an ambient temperature at the workpiece, a temperature of the induction heating cable, a temperature of a blanket in contact with the induction heating cable, a temperature of the workpiece, a coolant temperature, a coolant pressure, a coolant flow rate, a current measurement of current flowing through the induction heating cable, and/or a voltage measurement of a voltage at the induction heating cable, and the induction heating power supply logs the induction heating data in a storage device.

In some examples, the induction heating power supply transmits the induction heating data to a server. In some examples, the induction heating data collection device draws power from the induction heating cable. In some examples, the induction heating power supply further includes a second transmitter circuit to transmit second data via the induction heating cable, and the induction heating data collection device further includes a second receiver circuit to receive the second data via the induction heating cable.

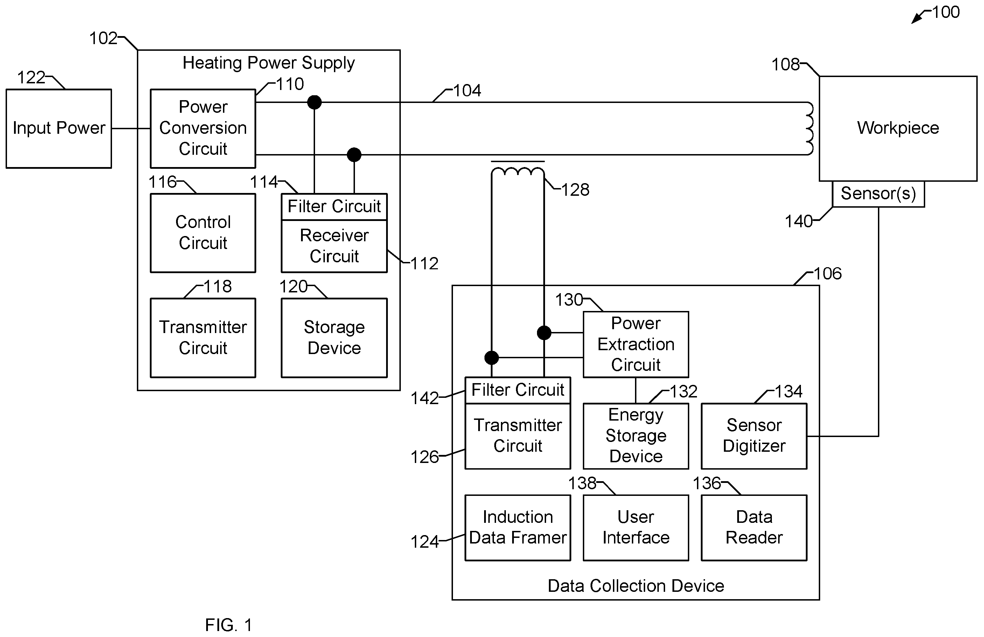

FIG. 1 shows an example induction heating system 100. The example induction heating system 100 of FIG. 1 includes an induction heating power supply 102, an induction heating cable 104, and a data collection device 106. The induction heating power supply 102 heats a workpiece 108 by transmitting induction heating power to the workpiece 108 via the induction heating cable 104, which is arranged proximate the workpiece 108 to induce current in the workpiece 108 via magnetic induction from the current in the induction heating cable 104.

The induction heating power supply 102 supplies induction heating power to the workpiece 108 and receives data from the data collection device 106, both via the induction heating cable 104. The induction heating power supply 102 includes a power conversion circuit 110, a receiver circuit 112, a filter circuit 114, a control circuit 116, a transmitter circuit 118, and a storage device 120.

The example power conversion circuit 110 converts input power 122 into induction heating power and transmits the induction heating power via the induction heating cable 104. For example, the power conversion circuit 110 may receive utility power and/or generator power, convert the input power 122 to a frequency suitable for heating the particular type of workpiece 108, and transmit the power via the induction heating cable 104. The induction heating cable 104 includes one or more conductors for conducting current, which can be arranged proximate a workpiece to heat the workpiece by induction.

The receiver circuit 112 coupled to the induction heating cable 104 and configured to receive data via the induction heating cable 104. As disclosed in more detail below, the power conversion circuit 110 outputs the induction heating power at a first frequency and the receiver circuit 112 receives the data at a second frequency different than the first frequency. To separate the data from the induction heating power, the induction heating power supply 102 includes a filter circuit 114 that attenuates the induction heating power. The filter circuit 114 may be a high pass filter and/or a bandpass filter for data signals that are substantially higher than the induction heating power frequency. The filter circuit 114 may be a low pass filter for data signals that are substantially lower that the induction heating power frequency.

While the example filter circuit 114 is shown as directly coupled to the induction heating cable 104 in parallel with the workpiece 108, in other examples the filter circuit 114 is directly coupled in series with the induction heating cable 104, inductively coupled to the induction heating cable 104, wirelessly coupled to the induction heating cable 104, and/or directly connected to the induction heating cable 104.

The control circuit 116 controls the power conversion circuit 110 to modify the induction heating power based on data received by the receiver circuit 112. For example, the data may include one or more of an ambient temperature at the workpiece 108 (e.g., a temperature of an immediately local environment, such as air temperature around the workpiece 108) being heated with the induction heating cable 104, a temperature of the induction heating cable 104, a temperature of a blanket in contact with the induction heating cable 104, a temperature of the workpiece 108, a measurement of current flowing through the induction heating cable 104, a voltage measurement of a voltage at the induction heating cable 104 (e.g., a voltage across the portion of the induction heating cable 104 inductively coupled to the workpiece 108), and/or an error signal. Additionally or alternatively, when the induction heating cable 104 is a liquid cooled cable, the data may include one or more of a temperature of coolant flowing through the induction heating cable 104, a coolant pressure, and/or a coolant flow rate. In some examples, the data may include one or more of a workpiece identifier, an induction heating cable identifier, an operator identifier, date information, time information, geographic information, a cable fixture identifier, and/or any type of operator or user input entered at the data collection device 106.

As used herein, a "blanket" refers to an insulative layer covering the induction heating cables and which protect the cables. As used herein, the term "identifier" may include a serial number, a model number, or any other identification value, and which may be expressed as a quick read (QR) code, a bar code, a human readable number, a radio frequency identification (RFID) tag, and/or any other machine readable indicia.

The control circuit 116 may control the power conversion circuit 110 based on the data to, for example, increase and/or decrease the induction heating power output, stop and/or start the induction heating power output, modify the frequency of the induction heating power output, and/or perform any other control or modification.

The transmitter circuit 118 transmits some or all of the received data to, for example, a local or remote storage device, a local or remote server, and/or any other device. An example recipient of the transmission of the data may be, for example, a computer or a server configured with Insight(R) software sold by Miller Electric(R). Additionally or alternatively, the storage device 120 stores the received data for later retrieval and/or transmission by the transmitter circuit 118. The example transmitter circuit 118 may include a wireless communications transmitter (e.g., cellular, Long Term Evolution (LTE), WiFi, Bluetooth(R), etc.) and/or a wired communications transmitter (e.g., Ethernet, CAN, USB etc.). The example storage device 120 may be an integrated storage device such as a hard drive, solid state storage, or memory device, or a removable storage device such as a USB drive or other connected storage.

The example transmitter circuit 118 and the example receiver circuit 112 may communicate using any appropriate modulation scheme. By way of example, the transmitter circuit 118 and the example receiver circuit 112 may communicate using Orthogonal Frequency Division Multiplexing (OFDM), Quadrature Amplitude Modulation (QAM), Frequency Shift Keying, and/or any other analog, digital, and/or spread spectrum modulation schemes, and/or any combination of modulation schemes. Example techniques that may be implemented by the transmitter circuit 118 and/or the receiver circuit 112 are described by Yonge et al., "An Overview of the HomePlug AV2 Technology," Journal of Electrical and Computer Engineering, Volume 2013. However, other techniques may be used by either the transmitter circuit 118 or the receiver circuit 112.

The example induction heating data collection device 106 includes an induction data framer 124, a transmitter circuit 126, a coupling circuit 128, a power extraction circuit 130, an energy storage device 132, a sensor digitizer 134, a data reader 136, and a user interface 138.

The induction data framer 124 frames induction heating data for transmission via the induction heating cable 104. The induction heating data may be generated from sensor data collected by one or more sensors 140 and converted to digital data via the sensor digitizer 134, received from the data reader 136, and/or input by a user or operator via the user interface 138. The example sensor(s) may include 140 a temperature sensor (e.g., a thermocouple, a thermistor, a resistive temperature device, an infrared sensor, etc.), a coolant pressure sensor, or a coolant flow sensor, and/or a location sensor. Example induction heating data includes one or more of an ambient temperature at the workpiece 108 being heated with the induction heating cable 104, a temperature of the induction heating cable 104, a temperature of a blanket in contact with the induction heating cable 104, a temperature of the workpiece 108, a measurement of current flowing through the induction heating cable 104, a voltage measurement of a voltage at the induction heating cable 104 (e.g., a voltage across the portion of the induction heating cable 104 inductively coupled to the workpiece 108), an error signal, a temperature of coolant flowing through the induction heating cable 104, a coolant pressure, a coolant flow rate, a workpiece identifier, an induction heating cable identifier, an operator identifier, date information, time information, geographic information, a cable fixture identifier, and/or any type of operator or user input entered at the data collection device 106.

The example data reader 136 may be a e.g., RFID reader, barcode scanner, QR code scanner, and/or any other type of data reader 136. The example user interface 138 may include any type(s) of user interface devices, such as selection buttons, switches, dials, number pads, touchscreens, and/or any other type of user interface device.

The example transmitter circuit 126 transmits the induction heating data via an AC signal, using a frequency different than an induction heating current frequency, on the induction heating cable 104 (e.g., output by the induction heating power supply 102). The example transmitter circuit 126 is coupled to the induction heating cable 104 via the coupling circuit 128 and a filter circuit 142. The filter circuit 142 enables the frequency transmitted by the transmitter circuit 126 to be output to the coupling circuit 128 while attenuating the frequencies of the induction heating power. The example coupling circuit 128 of FIG. 1 includes a current transformer magnetically coupled to the induction heating cable 104.

The power extraction circuit 130 extracts power from the induction heating cable 104 via the coupling circuit 128 to power the transmitter circuit 126, the induction data framer 124, the sensor digitizer 134, the data reader 136, and/or the user interface 138, and/or to charge the energy storage device 132. The example energy storage device 132 provides power to the transmitter circuit 126, the induction data framer 124, the sensor digitizer 134, the data reader 136, and/or the user interface 138 when the power extraction circuit 130 is not capable of powering the components. The example energy storage device 132 may include one or more batteries, one or more capacitors, and/or any other type of energy storage device.

In some examples, the data collection device 106 can be powered by the induction heating power supply 102 to enable the data collection device 106 to collect and/or send data while induction heating power is not being applied to the induction heating cable 104. The power conversion circuit 110 may output a pulse via the induction heating cable 104 to power the data collection device 106. After outputting the pulse, the power conversion circuit 110 turns off the power and the receiver circuit 112 receives data transmitted from the data collection device via the induction heating cable 104 in response to the pulse.

In some examples, the induction heating power supply 102 provides intermittent power to heat the workpiece 108 and, while not providing power, receives the data at the receiver circuit 112. In some such examples, communication only occurs when the induction heating power supply 102 is not outputting induction heating power, and the control circuit 116 implements logic to connect or enable the receiver circuit 102 to receive communications when the power supply 102 is not providing heating power. For example, the power conversion circuit 110 outputs the induction heating power via the induction heating cable 104 for a first time period, reduces or removes the induction heating power for a second time period following the first time period, outputs the induction heating power again during a third time period following the second time period, and so on. The receiver circuit 112 receives the data during the second time period. In some examples, instead of or in addition to including the filter circuit 114 to couple the receiver circuit 112 to the induction heating cable 104, the induction heating power supply 102 includes a relay, a contactor, or another type of isolation device to selectively connect and disconnect the receiver circuit 112 from the induction heating cable 104. The control circuit 116 coordinates the power conversion circuit 110 and the isolation device to connect the receiver circuit 112 when the power conversion circuit 110 is not outputting the induction heating power and to disconnect the receiver circuit 112 when the power conversion circuit 110 is outputting the induction heating power.

Conversely, the example heating power supply 102 may be configured to enable and/or connect the receiver circuit 112 to receive the data when the induction heating power supply 102 is outputting induction heating power, and the control circuit 116 implements logic to disconnect and/or disable the receiver circuit 102 when the power supply 102 is not providing heating power.

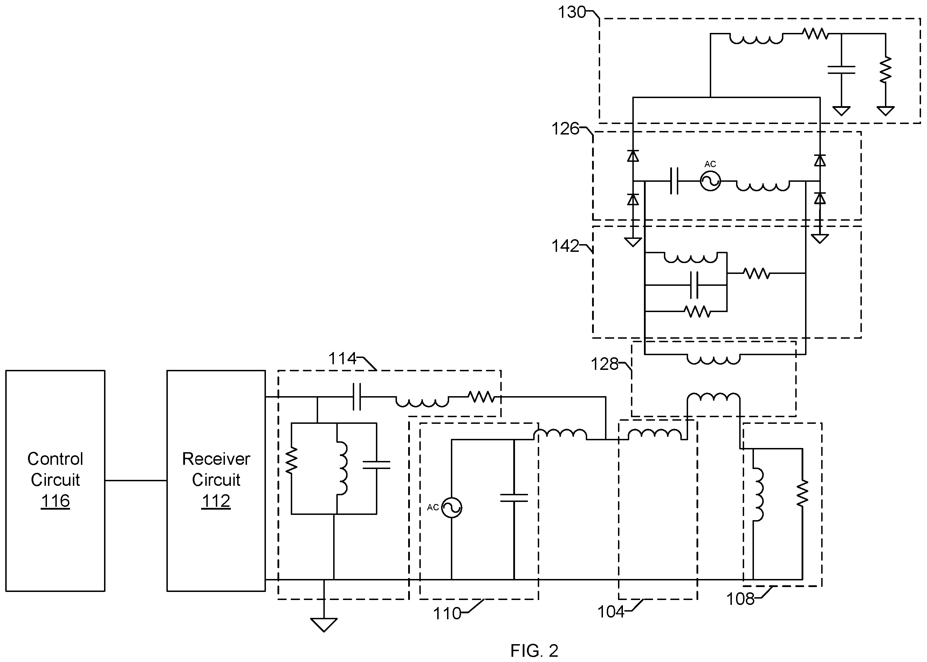

FIG. 2 is a circuit schematic diagram of an example implementation of the induction heating system 100 of FIG. 1. The circuit schematic illustrated in FIG. 2 includes example implementations or representations of the filter circuit 114, the induction heating cable 104, the transmitter circuit 126, the filter circuit 142, the power extraction circuit 130, and the coupling circuit 128.

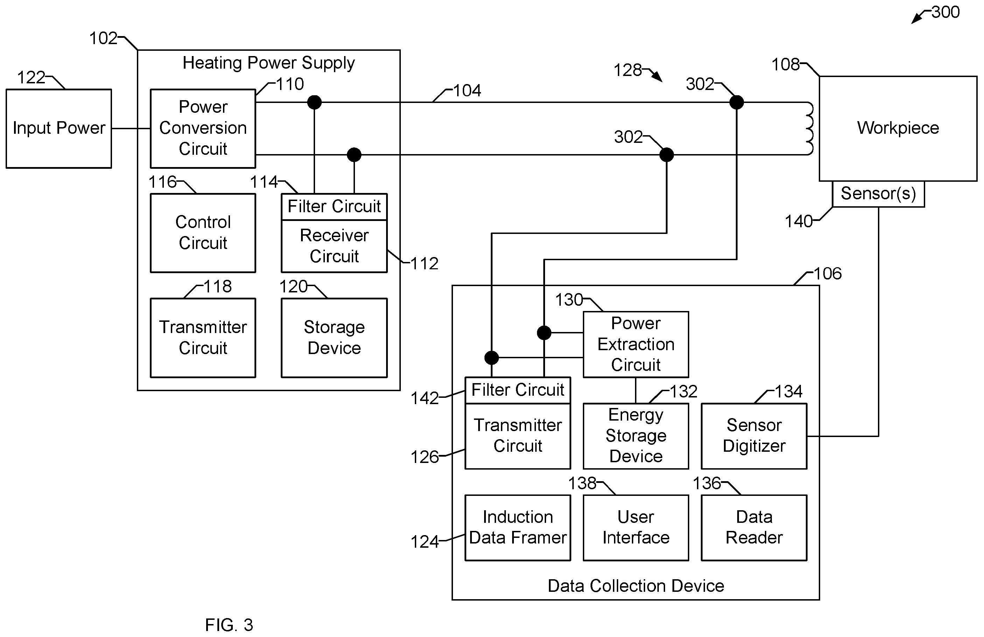

FIG. 3 shows another example induction heating system 300. In contrast with the example system 100 of FIG. 1, the system 300 of FIG. 3 implements one or more cable taps 302 in the coupling circuit 128 to couple the transmitter circuit 126 in parallel with an inductance of the workpiece 108 being heated by the induction heating cable 104.

In an example of operation of the systems 100, 300 of FIGS. 1 and/or 3, the control circuit 116 enables the power conversion circuit 110 to output the induction heating power via the induction heating cable 104 at a first frequency to heat the workpiece 108. As the induction heating power is flowing through the induction heating cable 104, the example power extraction circuit 130 extracts a portion of the induction heating power to power the induction data framer 124, the transmitter circuit 126, the sensor digitizer 134, the data reader 136, and/or the user interface 138, and/or to power the energy storage device 132. The sensor digitizer 134 digitizes signals received from the sensor(s) 140 (e.g., a voltage signal from a thermocouple measuring the temperature of the workpiece 108 as the workpiece 108 is heated) and provides the signals to the transmitter circuit 126. The transmitter circuit 126 transmits the data from the sensor digitizer 134 at a frequency different than the frequency of the induction heating power. For example, the transmitter circuit 126 may transmit the data at a frequency several orders of magnitude higher than the frequency of the induction heating power. The filter circuit 114 permits the transmitted data to be received at the receiver circuit 112, which reads the data from the induction heating cable 104. The receiver circuit 112 may store the data in the storage device 120, provide the data to the transmitter circuit 118 for transmission to a data collection server (or other device), and/or provide the data to the control circuit 116 for controlling the induction heating.

In some examples, the data collection devices 106 of FIGS. 1 and/or 3 can be powered by the induction heating power supply 102 to enable the data collection device 106 to collect and/or send data while induction heating power is not being applied to the induction heating cable 104. The power conversion circuit 110 may output a pulse via the induction heating cable 104 to power the data collection device 106. After outputting the pulse, the power conversion circuit 110 turns off the power and the receiver circuit 112 receives data transmitted from the data collection device via the induction heating cable 104 in response to the pulse.

In some examples, the induction heating power supply 102 provides intermittent power to heat the workpiece 108 and, while not providing power, receives the data at the receiver circuit 112. For example, the power conversion circuit 110 outputs the induction heating power via the induction heating cable 104 for a first time period, reduces or removes the induction heating power for a second time period following the first time period, outputs the induction heating power again during a third time period following the second time period, and so on. The receiver circuit 112 receives the data during the second time period. In some examples, instead of or in addition to including the filter circuit 114 to couple the receiver circuit 112 to the induction heating cable 104, the induction heating power supply 102 includes a relay, a contactor, or another type of isolation device to selectively connect and disconnect the receiver circuit 112 from the induction heating cable 104. The control circuit 116 coordinates the power conversion circuit 110 and the isolation device to connect the receiver circuit 112 when the power conversion circuit 110 is not outputting the induction heating power and to disconnect the receiver circuit 112 when the power conversion circuit 110 is outputting the induction heating power.

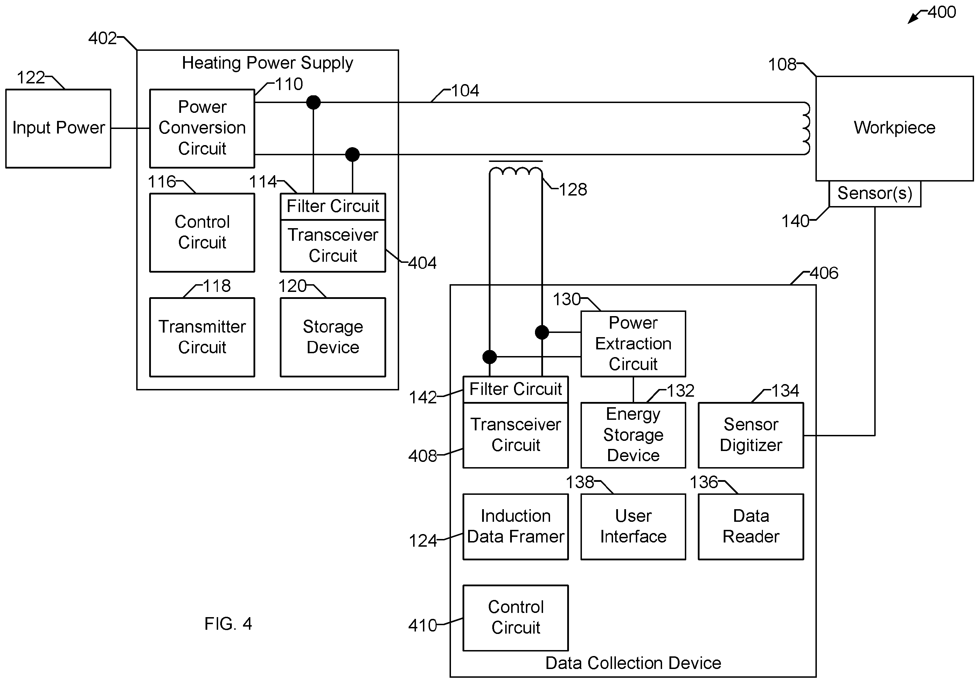

FIG. 4 is a block diagram of another example heating system 400 that includes a heating power supply 402 having a transceiver circuit 404, and a data collection device 406 that includes a transceiver circuit 408. The example heating power supply 402 includes the power conversion circuit 110, the filter circuit 114, the control circuit 116, the transmitter circuit 118, and/or the storage device 120 as described above. The example data collection device 406 includes the induction data framer 124, the power extraction circuit 130, the energy storage device 132, the sensor digitizer 134, the data reader, the user interface 138, and/or the filter circuit 142 of FIGS. 1 and/or 3.

In contrast with the example heating power supplies 102 of FIGS. 1 and 3, the heating power supply 402 is also capable of transmitting data via the induction heating cable 104 to the data collection device 406 (e.g., bidirectional communication between the heating power supply 402 and the data collection device 406). In addition to the example data transmitted by the data collection device to the heating power supply 402 via the induction heating cable 104, the heating power supply 402 may transmit data, such as control or configuration data, to the data collection device 406 for implementation by a control circuit 410 at the data collection device 406. Additionally or alternatively, the heating power supply 402 may transmit handshake information for use in negotiating the connection with the data collection device 406.

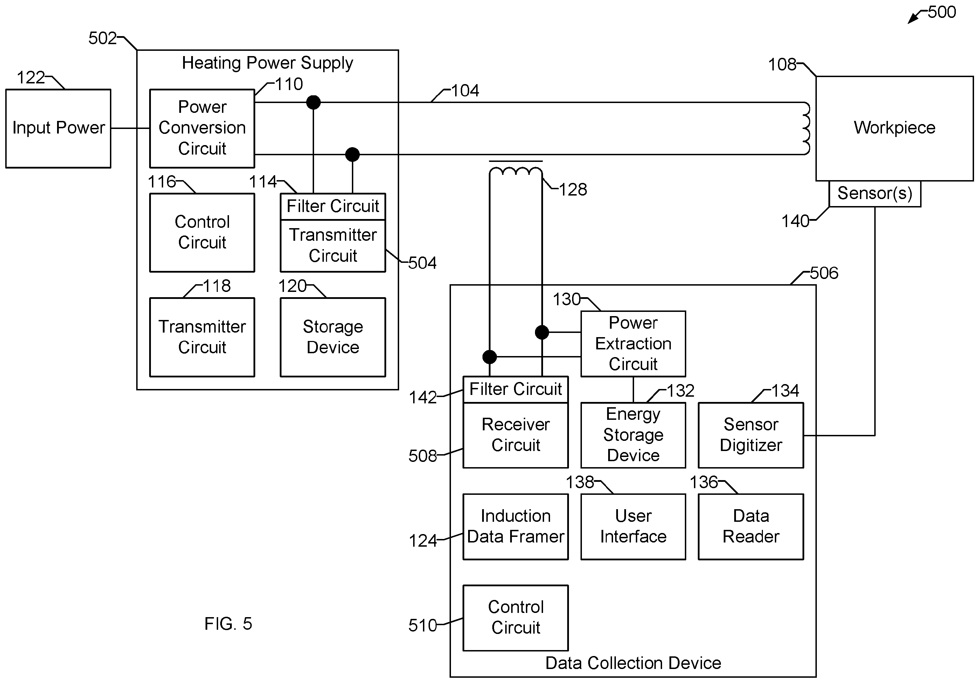

FIG. 5 is a block diagram of another example heating system 500 that includes a heating power supply 502 having a transmitter circuit 504, and a data collection device 506 that includes a receiver circuit 508 and a control circuit 510. The example transmitter circuit 504 may be similar or identical to the transmitter circuit 126 of FIGS. 1 and/or 3, but is implemented in the heating power supply 502 for transmission of control and/or configuration information to the data collection device 506. Conversely, the receiver circuit 508 may be similar or identical to the receiver circuit 112 of FIGS. 1 and/or 3, but is implemented in the data collection device 506 to receive data from the heating power supply 502 via the induction heating cable 104.

The example systems 400, 500 of FIGS. 4 and/or 5 may be modified according to any of the modifications discussed above with reference to FIGS. 1, 2, and/or 3.

While the above examples are described with reference to induction heating, the examples may be modified to be used for resistive heating, in which a heating cable provides electrical power to a heating element (or serves as the heating element) which is heated via I²R heating and thermally coupled to a workpiece to be heated. The examples described above may be modified to communicate via the resistive heating cable based on the application heating power and/or heating frequencies in the heating cable.

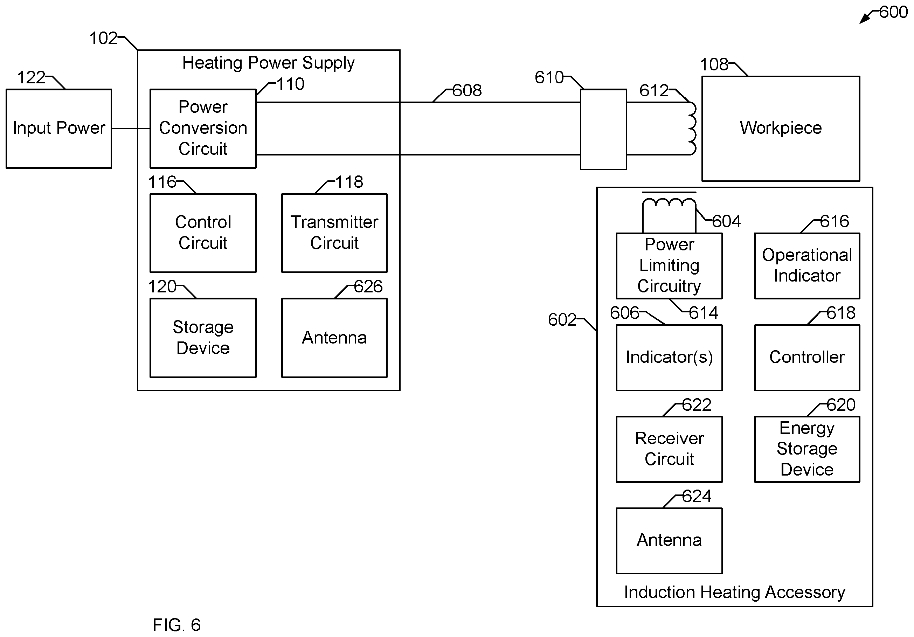

FIG. 6 shows another example induction heating system 600 including an induction heating accessory 602 configured to indicate the presence of induction heating power. Inductive heating of a workpiece is not readily detectable by visual inspection. Moreover, disconnection of induction heating cables (e.g., breaking of an induction heating circuit) during active induction heating can lead to substantial equipment damage. The example induction heating accessory 602 provides one or more indicators to alert operators as to the presence of active induction heating power.

The example induction heating accessory 602 includes an induction coil 604 and one or more indicator(s) 606. The induction coil 604 serves as a pickup coil to extract power from the magnetic fields generated near the induction heating cables. The example induction coil 604 of FIG. 6 is an air core pickup coil. However, the example induction coil 604 may be replaced with a current transformer and/or any other type of induction coil that may extract power from the magnetic fields. In the example of FIG. 6, the induction heating cables include one or more extension cables 608, a connector 610, and an induction heating blanket 612. The induction heating blanket 612 is magnetically coupled to the workpiece 108 to heat the workpiece 108. The extension cables 608 extend from the location of the heating power supply 102 to the connector 610, which couples the extension cables 608 to the induction heating blanket 612.

The induction coil 604 of the induction heating accessory 602 may be magnetically coupled to any of the extension cables 608, the connector 610, or the induction heating blanket 612. In some examples, the induction heating accessory 602 (e.g., a housing 614 holding the induction coil 604) is positioned near the connector 610 between or adjacent windings of the induction heating blanket 612 (e.g., in the presence of strong magnetic field lines). In some other examples, the induction heating accessory 602 (e.g., a housing 614 holding the induction coil 604) is positioned on the workpiece 108 adjacent one or more windings of the induction heating blanket 612.

The example indicator 606 may be a visual indicator (e.g., one or more LEDs, incandescent lights, and/or any other light source(s) or visual indicator(s)) and/or an audio indicator (e.g., a speaker). The indicator 606 is powered by the induction coil 604 when the induction coil 604 is in the presence of sufficiently strong magnetic fields (e.g., when the induction heating accessory 602 is appropriately positioned and the power supply 102 is outputting power to the induction heating blanket 612).

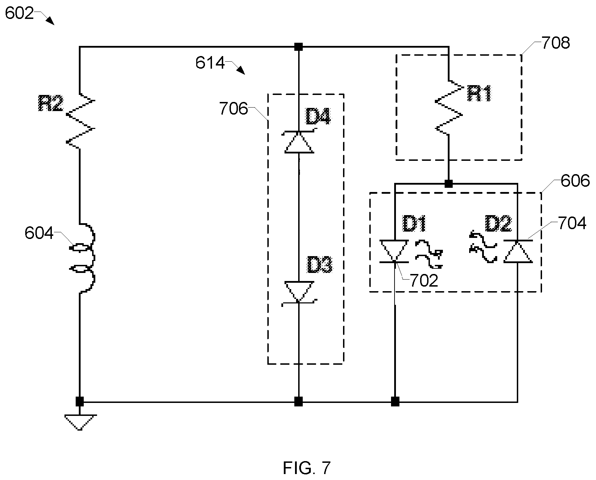

Because the magnetic fields may contain substantially higher power levels than needed to power the indicator(s) 606, the example induction heating accessory 602 includes power limiting circuitry 614. The power limiting circuitry 614 limits the voltage(s) and/or current(s) supplied to the indicator(s) 606 to reduce or eliminate potential damage form providing excess power to the indicator(s) 606. The power limiting circuitry 614 may have complexity based on the range of magnetic fields (e.g., induction heating currents and/or voltages) to which the induction heating accessory is expected to be exposed. An example implementation of the induction coil 604, the indicator(s) 606, and the power limiting circuitry 614 is described below with reference to FIG. 7.

Because the indicator(s) 606 does not make an indication when induction heating power is not being provided to the induction heating blanket 612 and when the indicator(s) 606 is inoperative (e.g., damaged or otherwise unable to provide an output indication), the example induction heating accessory 602 may further include an operational indicator 616 configured to output a separate indication that the indicator(s) 606 are operative. For example, a controller 618 may periodically test the indicator(s) 606 and/or the power limiting circuitry 614 to verify operation. The induction heating accessory 602 may include an energy storage device 620 to provide power to the controller 618 and/or the operational indicator 616.

In some examples, the indicator(s) 606 include a receiver circuit 622 coupled to an antenna 624. The heating power supply 102 may also include an antenna 626 to enable the transmitter circuit 118 to transmit a signal to the receiver circuit 622 when the power conversion circuit 110 is outputting induction heating power. When the heating power supply 102 is outputting power, the transmitter circuit 118 outputs the signal and the magnetic coil 604 provides power to the receiver circuit 622 to enable the receiver circuit 622 to process the incoming signal from the heating power supply 102 and to power the indicator(s) 606 based on the received signal.

FIG. 7 is a schematic diagram of an example implementation of the induction heating accessory 602 of FIG. 6. The example induction heating accessory 602 includes the induction coil 604, the indicator 606, and the power limiting circuitry 614. The induction coil 604 supplies an AC voltage based on the magnetic field generated via the extension cables 608, the connector 610, or the induction heating blanket 612. The indicator 606 includes two anti-parallel LEDs 702, 704, such that AC power generated in the circuit by the induction coil 604 powers at least one of the LEDs 702, 704 at a given time.

The example power limiting circuitry 614 includes a voltage limiting circuit 706 and a current limiting circuit 708. The example voltage limiting circuit 706 limits an upper voltage supplied to the indicator 606 (e.g., to the LEDs 702, 704). The voltage limiting circuit 706 includes two Zener diodes with the cathodes coupled in series. The example current limiting circuit 708 limits an upper current supplied to the indicator 606 (e.g., to the LEDs 702, 704). The current limiting circuit 708 includes one or more resistors. The example power limiting circuitry 614 may be tuned based on the magnetic fields expected to be encountered by the induction coil 604. As the range of magnetic fields increases, the complexity and/or performance of the power limiting circuitry 614 may similarly increase.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims.

## Claims

1. An induction heating accessory, comprising:
an induction coil (604) configured to be electromagnetically coupled to a cable (608) carrying induction heating current;
a power extraction circuit configured to extract power from the induction heating current via the induction coil (604);
**characterized by** a
circuitry comprising one or more indicators (606) configured to generate an output indicative of the induction heating current flowing through the cable (608) based on receiving power from the cable (608) via the induction coil (604), the one or more indicators (606) comprising a receiver circuit (622) coupled to an antennae (624), wherein the induction coil (604) provides power to the receiver circuit (622) to enable the receiver circuit (622) to process an incoming signal transmitted from a heating power supply (118) which includes an antenna (626) to enable a transmitter circuit (118) to transmit the incoming signal to the receiver circuit (622), and to power the one or more indicators (606) based on the incoming signal.

2. The induction heating accessory as defined in claim 1, wherein the one or more indicators (606) are configured to generate an audible or visual output in response to at least a threshold induction heating current.

3. The induction heating accessory as defined in claim 2, wherein the one or more indicators (606) comprise one or more lights.

4. The induction heating accessory as defined in claim 2, wherein the one or more indicators (606) comprise a speaker.

5. An induction heating accessory, comprising:
an induction coil (604) configured to generate a first alternating current in the presence of induction heating magnetic fields;
power limiting circuitry (614) configured to convert the first alternating current to a second alternating current;
an indicator (606) configured to generate an audible or visual output in response to at least a threshold alternating current from the power limiting circuitry (614);
an operational indicator (616) configured to provide an indication that the indicator (606) is operable; and
an energy storage device (620) to provide power to the operational indicator (616).

6. The induction heating accessory (602) as defined in claim 5, further comprising a housing configured to contain at least one of the induction coil (604), the power limiting circuitry (614), or the indicator (606).

7. The induction heating accessory (602) as defined in claim 6, wherein the housing is configured to be coupled to at least one of an induction heating blanket, an induction heating extension cable, or an induction heating cable connector.

8. The induction heating accessory (602) as defined in claim 6, wherein the housing is configured to be coupled to a workpiece (108).

9. The induction heating accessory (602) as defined in claim 5, wherein the indicator (606) comprises one or more lights.

10. The induction heating accessory (602) as defined in claim 5, wherein the indicator (606) comprises a speaker.

11. The induction heating accessory (602) as defined in claim 5, wherein the induction coil (604), the power limiting circuitry (614), and the indicator (606) are configured to generate the audible or visual output when induction heating power is present in an induction heating device proximate the induction heating accessory (602).

12. The induction heating accessory (602) as defined in claim 5, wherein the power limiting circuitry (614) comprises a voltage limiting circuit configured to limit an upper voltage supplied to the indicator (606).

13. The induction heating accessory (602) as defined in claim 5, wherein the power limiting circuitry (614) comprises a current limiting circuit configured to limit an upper current supplied to the indicator (606).

14. The induction heating accessory (602) as defined in claim 5, further comprising an antenna (624), wherein the indicator (606) comprises a wireless receiver circuit configured to activate a visual indicator or an audio indicator in response to receiving both of power from the power limiting circuitry (614) and a wireless signal from an antenna (624).

## Patentansprüche

1. Induktionsheizungszubehör, aufweisend:
eine Induktionsspule (604), die so eingerichtet ist, dass sie elektromagnetisch an ein Kabel (608) gekoppelt ist, das Induktionsheizstrom führt;
eine Leistungsentnahmeschaltung, die so eingerichtet ist, dass sie über die Induktionsspule (604) Leistung aus dem Induktionsheizstrom entnimmt;
**gekennzeichnet durch**
eine Schaltung, aufweisend einen oder mehrere Indikatoren (606), die so eingerichtet sind, dass sie eine Ausgabe, die den durch das Kabel (608) fließenden Induktionsheizstrom anzeigt, basierend auf der über die Induktionsspule (604) von dem Kabel (608) empfangenen Leistung erzeugen, wobei der eine oder die mehreren Indikatoren (606) eine Empfangsschaltung (622) aufweisen, die mit einer Antenne (624) gekoppelt ist, wobei die Induktionsspule (604) der Empfangsschaltung (622) Leistung bereitstellt, um es der Empfangsschaltung (622) zu ermöglichen, ein eingehendes Signal zu verarbeiten, das von einer Heizstromversorgung (118) übertragen wird, die eine Antenne (626) umfasst, um es einer Sendeschaltung (118) zu ermöglichen, das eingehende Signal an die Empfängerschaltung (622) zu übertragen, und um den einen oder die mehreren Indikatoren (606) basierend auf dem eingehenden Signal mit Leistung zu versorgen.

2. Induktionsheizungszubehör nach Anspruch 1, wobei der eine oder die mehreren Indikatoren (606) so eingerichtet sind, dass sie als Reaktion auf mindestens einen Schwellenwert des Induktionsheizstroms eine hörbare oder visuelle Ausgabe erzeugen.

3. Induktionsheizungszubehör nach Anspruch 2, wobei der eine oder die mehreren Indikatoren (606) eine oder mehrere Leuchten aufweisen.

4. Induktionsheizungszubehör nach Anspruch 2, wobei der eine oder die mehreren Indikatoren (606) einen Lautsprecher aufweisen.

5. Induktionsheizungszubehör, aufweisend:
eine Induktionsspule (604), die so eingerichtet ist, dass sie in Gegenwart von Induktionsheizmagnetfeldern einen ersten Wechselstrom erzeugt;
eine Leistungsbegrenzungsschaltung (614), die so eingerichtet ist, dass sie den ersten Wechselstrom in einen zweiten Wechselstrom umwandelt;
einen Indikator (606), der so eingerichtet ist, dass er als Reaktion auf mindestens einen Schwellenwert des Wechselstroms von der Leistungsbegrenzungsschaltung (614) eine hörbare oder visuelle Ausgabe erzeugt;
einen Betriebsindikator (616), der so eingerichtet ist, dass er eine Anzeige bereitstellt, dass der Indikator (606) betriebsbereit ist; und
eine Energiespeichervorrichtung (620), um den Betriebsindikator (616) mit Leistung zu versorgen.

6. Induktionsheizungszubehör (602) nach Anspruch 5, ferner aufweisend ein Gehäuse, das so eingerichtet ist, dass es mindestens eine/eines der Induktionsspule (604), der Leistungsbegrenzungsschaltung (614) oder des Indikators (606) aufnimmt.

7. Induktionsheizungszubehör (602) nach Anspruch 6, wobei das Gehäuse so eingerichtet ist, dass es an mindestens eine/eines von einer Induktionsheizdecke, einem Induktionsheizverlängerungskabel oder einem Induktionsheizkabelverbinder gekoppelt ist.

8. Induktionsheizungszubehör (602) nach Anspruch 6, wobei das Gehäuse so eingerichtet ist, dass es an ein Werkstück (108) gekoppelt ist.

9. Induktionsheizungszubehör (602) nach Anspruch 5, wobei der Indikator (606) eine oder mehrere Leuchten aufweist.

10. Induktionsheizungszubehör (602) nach Anspruch 5, wobei der Indikator (606) einen Lautsprecher aufweist.

11. Induktionsheizungszubehör (602) nach Anspruch 5, wobei die Induktionsspule (604), die Leistungsbegrenzungsschaltung (614) und der Indikator (606) so eingerichtet sind, dass sie die hörbare oder visuelle Ausgabe erzeugen, wenn Induktionsheizleistung in einer Induktionsheizvorrichtung in der Nähe des Induktionsheizungszubehörs (602) vorhanden ist.

12. Induktionsheizungszubehör (602) nach Anspruch 5, wobei die Leistungsbegrenzungsschaltung (614) eine Spannungsbegrenzungsschaltung aufweist, die so eingerichtet ist, dass sie eine obere Spannung begrenzt, die dem Indikator (606) zugeführt wird.

13. Induktionsheizungszubehör (602) nach Anspruch 5, wobei die Leistungsbegrenzungsschaltung (614) eine Strombegrenzungsschaltung aufweist, die so eingerichtet ist, dass sie einen oberen Strom begrenzt, der dem Indikator (606) zugeführt wird.

14. Induktionsheizungszubehör (602) nach Anspruch 5, ferner aufweisend eine Antenne (624), wobei der Indikator (606) eine drahtlose Empfangsschaltung aufweist, die so eingerichtet ist, dass sie einen visuellen Indikator oder einen Audioindikator als Reaktion auf das Empfangen sowohl von Leistung von der Leistungsbegrenzungsschaltung (614) als auch eines drahtlosen Signals von einer Antenne (624) aktiviert.

## Revendications

1. Accessoire de chauffage par induction, comprenant :
une bobine d'induction (604) configurée pour être couplée électromagnétiquement à un câble (608) transportant un courant de chauffage par induction ;
un circuit d'extraction de puissance configuré pour extraire de la puissance du courant de chauffage par induction via la bobine d'induction (604) ;
**caractérisé par**
un circuit comprenant un ou plusieurs indicateurs (606) configurés pour générer une sortie indicative du courant de chauffage par induction circulant dans le câble (608) sur la base de la réception de puissance depuis le câble (608) via la bobine d'induction (604), le ou les indicateurs (606) comprenant un circuit récepteur (622) couplé à une antenne (624), dans lequel la bobine d'induction (604) fournit de la puissance au circuit récepteur (622) pour permettre au circuit récepteur (622) de traiter un signal entrant transmis depuis une alimentation de chauffage (118) qui comprend une antenne (626) afin de permettre à un circuit émetteur (118) de transmettre le signal entrant au circuit récepteur (622), et d'alimenter le ou les indicateurs (606) sur la base du signal entrant.

2. Accessoire de chauffage par induction selon la revendication 1, dans lequel le ou les indicateurs (606) sont configurés pour générer une sortie audible ou visuelle en réponse à un courant de chauffage par induction atteignant l'au moins un seuil.

3. Accessoire de chauffage par induction selon la revendication 2, dans lequel le ou les indicateurs (606) comprennent une ou plusieurs lumières.

4. Accessoire de chauffage par induction selon la revendication 2, dans lequel le ou les indicateurs (606) comprennent un haut-parleur.

5. Accessoire de chauffage par induction, comprenant :
une bobine d'induction (604) configurée pour générer un premier courant alternatif en présence de champs magnétiques de chauffage par induction ;
un circuit de limitation de puissance (614) configuré pour convertir le premier courant alternatif en un deuxième courant alternatif ;
un indicateur (606) configuré pour générer une sortie audible ou visuelle en réponse à un courant alternatif atteignant l'au moins un seuil provenant du circuit de limitation de puissance (614) ;
un indicateur opérationnel (616) configuré pour fournir une indication que l'indicateur (606) est opérationnel ; et
un dispositif de stockage d'énergie (620) pour fournir de l'énergie à l'indicateur opérationnel (616).

6. Accessoire de chauffage par induction (602) selon la revendication 5, comprenant en outre un boîtier configuré pour contenir l'au moins un de la bobine d'induction (604), du circuit de limitation de puissance (614) ou de l'indicateur (606).

7. Accessoire de chauffage par induction (602) selon la revendication 6, dans lequel le boîtier est configuré pour être couplé à l'au moins un d'une couverture de chauffage par induction, d'un câble d'extension de chauffage par induction, ou d'un connecteur de câble de chauffage par induction.

8. Accessoire de chauffage par induction (602) selon la revendication 6, dans lequel le boîtier est configuré pour être couplé à une pièce à usiner (108).

9. Accessoire de chauffage par induction (602) selon la revendication 5, dans lequel l'indicateur (606) comprend une ou plusieurs lumières.

10. Accessoire de chauffage par induction (602) selon la revendication 5, dans lequel l'indicateur (606) comprend un haut-parleur.

11. Accessoire de chauffage par induction (602) selon la revendication 5, dans lequel la bobine d'induction (604), le circuit de limitation de puissance (614) et l'indicateur (606) sont configurés pour générer la sortie audible ou visuelle lorsque la puissance de chauffage par induction est présente dans un dispositif de chauffage par induction à proximité de l'accessoire de chauffage par induction (602).

12. Accessoire de chauffage par induction (602) selon la revendication 5, dans lequel le circuit de limitation de puissance (614) comprend un circuit de limitation de tension configuré pour limiter une tension supérieure fournie à l'indicateur (606).

13. Accessoire de chauffage par induction (602) selon la revendication 5, dans lequel le circuit de limitation de puissance (614) comprend un circuit de limitation de courant configuré pour limiter un courant supérieur fourni à l'indicateur (606).

14. Accessoire de chauffage par induction (602) selon la revendication 5, comprenant en outre une antenne (624), dans lequel l'indicateur (606) comprend un circuit récepteur sans fil configuré pour activer un indicateur visuel ou un indicateur audio en réponse à la réception à la fois de la puissance provenant du circuit de limitation de puissance (614) et d'un signal sans fil provenant d'une antenne (624).
